# FASCICULE DE BREVET EUROPEEN

(11) **EP 0 507 689 B1**
(45) Date de publication et mention de la délivrance du brevet: **28.12.1994**
(21) Numéro de dépôt: 92400928.5
(22) Date de dépôt: 02.04.1992
(51) Int. Cl.: B01F 15/04, B29B 7/60, B29C 31/06, B01F 5/10

(54) **Installation pour l'alimentation automatique d'une machine de transformation notamment de matière plastique, par un mélange homogène de plusieurs produits**
Automatische Zufuhrvorrichtung für eine Verarbeitungsmaschine, insbesondere für die Kunststoffverarbeitung, durch homogenes Mischen mehrerer Produkte
Automatic feeding device for a processing machine, particularly for processing plastic material, by homogeneous mixing of several products

(30) Priorité: 02.04.1991 FR 9103966
(43) Date de publication de la demande: 07.10.1992
(73) Titulaire: Perrin, Robert, F-93698 Pantin (Seine Saint Denis) (FR)
(72) Inventeur: Perrin, Robert, F-93698 Pantin (Seine Saint Denis) (FR)
(74) Mandataire: Cabinet HERRBURGER

(56) Documents cités:
- EP-A- 0 344 521
- DE-A- 2 247 518
- GB-A- 2 091 906

## Description

L'invention concerne une installation pour l'alimentation automatique d'une machine de transformation, notamment de matière plastique, par un mélange homogène de plusieurs produits.

On connait par DE-A-2 247 518 une telle installation dans laquelle des trémies peseures, une par produit, sont reliées à un mélangeur. Le mélange issu de ce mélangeur est condeur par un organe de transport vers une extrudence.

L'invention a pour but la réalisation d'une installation qui soit d'un faible encombrement, qui puisse alimenter directement une machine de transformation à l'aide d'un mélange de produits homogène, les composants de ce mélange étant déterminés avec précision.

Ces résultats sont obtenus par une installation caractérisée en ce que la machine de transformation supporte une première trémie contenant un organe mélangeur, cette trémie étant pourvue d'un orifice inférieur de sortie du produit mélangé relié à l'orifice d'alimentation de la machine de transformation et d'un orifice supérieur d'alimentation de cette trémie en produits à mélanger, cet orifice supérieur étant relié à l'orifice de sortie d'une seconde trémie dite de pesage supportée par la machine de transformation par l'intermédiaire de capteurs de pesage, cette seconde trémie étant reliée à plusieurs conduits d'alimentation en produits par au moins une canalisation souple.

Suivant une autre caractéristique de l'invention, la seconde trémie de pesage est supportée indirectement par la machine de transformation par l'intermédiaire de la première trémie.

Suivant une autre caractéristique de l'invention, la seconde trémie est reliée par son extrémité supérieure à un groupe d'aspiration assurant le transfert par aspiration des produits vers cette trémie, cette liaison comportant une canalisation souple.

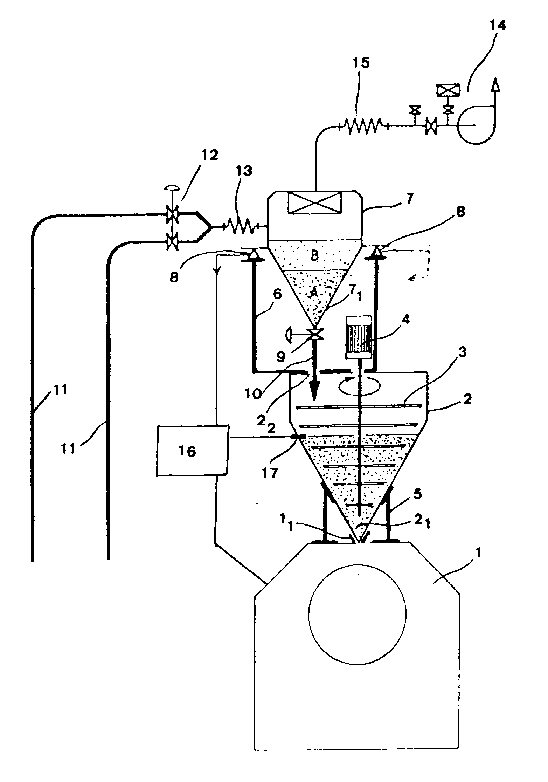

L'invention est représentée à titre d'exemple non limitatif sur l'unique dessin ci-joint qui est une vue schématique d'un mode de réalisation de l'installation conforme à l'invention.

On prévoit directement sur une machine de transformation 1 une trémie 2 à l'intérieur de laquelle est prévu un organe mélangeur 3 entraîné en rotation par un moteur électrique 4.

Cette machine de transformation est, par exemple, constituée par une machine d'extrusion alimentant un moule pour le moulage d'objets en matière plastique et l'orifice inférieur 2₁ de la trémie débouche dans l'orifice d'alimentation 1₁ de la machine de transformation afin que les produits mélangés dans la trémie 2 soient introduits directement, à l'état de mélange homogène, dans la machine de transformation 1.

On évite ainsi que, entre la trémie 2 et la machine 1, le produit mélangé ait la possibilité de se séparer du fait de leur densité, de leur granulométrie ou de leur structure différentes.

Cette trémie 2 supportée par la machine de transformation 1 par l'intermédiaire de montants 5, supporte elle-même par l'intermédiaire d'éléments de supports 6, une seconde trémie 7 par l'intermédiaire de jauges de contraintes 8.

L'orifice inférieur 7₁ de cette seconde trémie 7 est pourvu d'une vanne 9 et d'un conduit 10 débouchant dans un orifice supérieur 2₂ de la trémie 2. La liaison entre ce conduit 10 et cet orifice 2₂ est réalisée de manière souple, c'est-à-dire par exemple par l'intermédiaire d'un soufflet afin de pouvoir effectuer une mesure pondérale précise du contenu de la trémie 7 à l'aide des capteurs 8.

Cette trémie 7 est alimentée par les divers produits à mélanger A et B par l'intermédiaire de plusieurs canalisations 11 pourvues de vannes d'obturation 12, ces vannes étant, dans l'exemple représenté, reliées par une seule canalisation souple 13 à la trémie 7.

Egalement, dans cette installation, l'alimentation de la trémie 7 en produits différents en obtenue par un transfert pneumatique et le groupe d'aspiration 14 est relié à l'extrémité supérieure de la trémie 7 par une canalisation souple 15 ou similaire.

L'installation conforme à l'invention permet donc d'alimenter successivement la trémie 7 par les différents produits à mélanger, la vanne 12 étant immédiatement actionnée dès que le poids de l'un ou l'autre des produits ou de leur somme correspond à la valeur désirée.

Les mesures de ces poids sont effectuées, après tarage, par l'installation de pesage 16 qui n'autorise le pesage par les capteurs 8 que lorsque le fonctionnement de la machine 1 n'est pas susceptible de troubler les mesures de ces valeurs. Ainsi, si la machine de transformation 1 alimente des moules, l'installation de pesage 16 est couplée à la machine de transformation afin d'autoriser le pesage à l'aide des capteurs 8 en dehors de périodes de fermeture et d'ouverture du moule

Egalement, cette installation de pesage est reliée à un contrôleur de niveau 17 qui est destiné à commander le dispositif d'obturation 9 afin de permettre l'écoulement de la totalité des produits introduits l'un après l'autre dans la trémie 7 vers la trémie 2 où ils vont être mélangés de manière homogène.

L'installation de pesage 16 ne pourra donc effectuer une opération de pesage que en dehors des périodes d'écoulement des produits vers la trémie 2.

L'installation conforme à l'invention permet ainsi d'effectuer une gestion précise de la consommation des divers produits par chaque machine de transformation en connaissant exactement le poids et non le volume de chacun des produits entrant dans la composition du mélange, ce mélange étant en outre introduit à l'état homogène dans la machine de transformation, quelle que soit la nature et l'état des produits à mélanger.

## Revendications

1. Installation pour l'alimentation automatique d'une machine de transformation, notamment de matière plastique, par un mélange homogène de plusieurs produits, machine caractérisée en ce que la machine de transformation (1) supporte une première trémie (2) contenant un organe mélangeur (3), cette trémie étant pourvue d'un orifice inférieur (2₁) de sortie du produit mélangé relié à l'orifice d'alimentation (1₁) de la machine de transformation et d'un orifice supérieur (2₂) d'alimentation de cette trémie (2) en produits à mélanger, cet orifice supérieur (2₂) étant relié à l'orifice de sortie d'une seconde trémie dite de pesage (7) supportée par la machine de transformation par l'intermédiaire de capteurs de pesage (8), cette seconde trémie étant reliée à plusieurs conduits (11) d'alimentation en produits par au moins une canalisation souple (13).

2. Installation conforme à la revendication 1, caractérisée en ce que la seconde trémie de pesage (7) est supportée indirectement par la machine de transformation (1) par l'intermédiaire de la première trémie (2).

3. Installation conforme à l'une quelconque des revendications précédentes, caractérisée en ce que la seconde trémie (7) est reliée par son extrémité supérieure à un groupe d'aspiration (14) assurant le transfert par aspiration des produits vers cette trémie, cette liaison comportant une canalisation souple (15).

4. Installation conforme à l'une quelconque des revendications précédentes, caractérisée en ce que la première trémie (2) est pourvue d'un organe de contrôle de niveau (17) commandant l'actionnement d'une vanne (9) pour l'écoulement des produits pesés non mélangés de la seconde trémie (7) vers la première trémie (2).

5. Installation conforme à l'une quelconque des revendications précédentes, caractérisée en ce que la machine de transformation comprend un moule pour le moulage de produits en matière plastique et les capteurs de pesage (8) sont reliés à une installation de pesage (16) reliée à cette machine de transformation (1) pour effectuer le pesage en dehors des période de fermeture et d'ouverture du moule.

## Claims

1. Installation for automatically supplying a transformation machine, in particular for plastics material, with a homogeneous mixture of a plurality of products, characterised in that the transformation machine (1) supports a first hopper (2) containing a mixer member (3), this hopper being provided with a lower aperture (2₁) for the output of the mixed product connected to the feed aperture (1₁) of the transformation machine and an upper aperture (2₂) for supplying this hopper (2) with products to be mixed, this upper aperture (2₂) being connected to the output aperture of a second so-called weighing hopper (7) supported by the transformation machine by means of weighing sensors (8), this second hopper being connected to a plurality of product feed conduits (11) by at least one flexible pipeline (13).

2. Installation according to Claim 1, characterised in that the second, weighing hopper (7) is indirectly supported by the transformation machine (1) by means of the first hopper (2).

3. Installation according to any one of the preceding claims, characterised in that the second hopper (7) is connected by its upper end to a suction assembly (14) which transfers the products to this hopper by suction, this connection comprising a flexible pipeline (15).

4. Installation according to any one of the preceding claims, characterised in that the first hopper (2) is provided with a level-checking member (17) controlling the actuation of a valve (9) for the flow of weighed unmixed products from the second hopper (7) to the first hopper (2).

5. Installation according to any one of the preceding claims, characterised in that the transformation machine comprises a mould for moulding plastics material products and the weighing sensors (8) are connected to a weighing installation (16) connected to this transformation machine (1) in order to perform the weighing operation outside the periods when the mould is opened and closed.

## Patentansprüche

1. Anlage zur automatischen Versorgung einer Verarbeitungsmaschine, insbesondere einer für die Verarbeitung von Kunststoff, mit einer homogenen Mischung aus mehreren Produkten, dadurch gekennzeichnet, dass die Verarbeitungsmaschine (1) einen ersten Trichter (2) trägt, in welchem sich eine Mischeinrichtung (3) befindet, und dieser Trichter mit einer unteren Produktaustrittsöffnung (2₁), welche mit der Öffnung (1₁) zur Speisung der Verarbeitungsmaschine verbunden ist, sowie mit einer oberen Öffnung (2₂) zum Einspeisen von zu mischenden Produkten in diesen Trichter (2) versehen ist, wobei diese obere Öffnung (2₂) mit der Austrittsöffnung eines zweiten Trichters (7) verbunden ist, welcher als Wägetrichter bezeichnet wird, von der Verarbeitungsmaschine über dazwischenliegende Wägekraftaufnehmer (8) gehalten wird, und durch mindestens eine flexible Rohrleitung (13) mit einer Produktspeiseleitung (11) verbunden ist.

2. Anlage nach Anspruch 1, dadurch gekennzeichnet, dass der zweite Wägetrichter (7) indireckt mittels des ersten Trichters (2) von der Verarbeitungsmaschine (11) getragen wird.

3. Anlage nach einem der vorhergehenden Ansprüche, dadurch gekennzeichnet, dass der zweite Wägetrichter (7) mit seinem oberen Ende mit einem Sauggebläseaggregat (14) verbunden ist, welches für den Transport der Produkte zu diesen Trichter sorgt, wobei diese Verbindung eine flexible Rohrleitung (15) aufweist.

4. Anlage nach einem der vorhergehenden Ansprüche, dadurch gekennzeichnet, dass der erste Trichter (2) mit einer Einrichtung zur Niveauregelung (17) versehen ist, welche das Betätigen eines Schiebers (9) steuert, um ein Abfliessen von abgewogenen, unvermischten Produkten vom zweiten Trichter (7) in den ersten Trichter (2) zu ermöglichen.

5. Anlage nach einem der vorhergehenden Ansprüche, dadurch gekennzeichnet, dass die Verarbeitungsmaschine eine Giessform zum Formen von Erzeugnissen aus Kunststoff aufweist und die Wägekraftaufnehmer (8) mit einer Wägeanlage (16) verbunden sind, welche ihrerseits mit der Verarbeitungsmaschine (1) verbunden ist, damit der Wägevorgang ausserhalb der Schliess- oder Öffnungsphase der Gussform stattfindet.
